# EUROPEAN PATENT SPECIFICATION

(11) **EP 0 549 150 B1**
(45) Date of publication and mention of the grant of the patent: **08.11.1995**
(21) Application number: 92310949.0
(22) Date of filing: 01.12.1992
(51) Int. Cl.: B65G 37/00

(54) **Conveyor guide rail assembly**
Schienenführung für Förderer
Montage de rail de guidage pour convoyeur

(30) Priority: 23.12.1991 US 812411
(43) Date of publication of application: 30.06.1993
(73) Proprietor: ELOPAK SYSTEMS AG, 8152 Glattbrugg (CH)
(72) Inventor: Drury, Timothy Howard, Howell, Michigan 48843 (US); Owen, Barry Charles, Southfield, Michigan 48076 (US)
(74) Representative: Burrows, Anthony Gregory

(56) References cited:
- FR-A- 2 214 618
- US-A- 3 788 455
- US-A- 4 159 056

## Description

This invention relates to a conveyor guide rail assembly, which is especially, but not exclusively, suitable for indexing conveyors having compartments therein for carrying cartons to be filled with a still liquid product.

Heretofore, chain conveyor guide rail assemblies have had a tendency to become deformed or assume a somewhat "S" shaped configuration along their lengths, or, in order for such chain conveyor guide rail assemblies to remain straight without any deformation or buckling throughout the length thereof, it was necessary to provide thick and, hence, heavy and more costly components therefor. More specifically, prior guide rail assemblies have consisted of parallel, interconnected plastics and metal longitudinal strips, with the plastics strip supporting a moving chain and lug system, and the steel strip mounted via support posts on a machine base, wherein one or both strips have been made sufficiently thick to resist deformation of the interconnected strips throughout their length. One particular assembly has two horizontal, stainless steel strips receiving a horizontal polymer segment between them, the outer steel strip, which faces vertical compartment-defining metal elements carried by upper and lower endless conveying chains, being received in an oblong-rectangular-section groove in a central longitudinal portion of the polymer segment. The stainless steel strips are of rectangular cross-section. The segment is itself of an oblong-rectangular cross-section with its major faces vertical. Each vertical element has upper and lower horizontal extensions which are arranged face-to-face with the upper and lower horizontal faces of the respective segments of two identical such assemblies arranged one inverted vertically below the other. The upper and lower horizontal extensions of each vertical element are connected to the respective upper and lower chains which glide upon the respective vertical inner faces of the respective upper and lower longitudinal edge portions of the respective assemblies. In each assembly, the two metal strips are interconnected by threaded metal fasteners extending through holes in the segment and having screwing heads accessible from only the outer side of the assembly and thus repeatedly masked by the compartment-defining metal elements. The reception of the rectangular-section outer strip in the rectangular-section groove in the polymer element makes clearances between the strip and the groove side walls difficult to clean thoroughly.

According to the present invention, there is provided a guide rail assembly for all endless conveying means, as defined in claim 1.

Owing to the invention, it is possible to improve the cleanability of a guide rail assembly for endless conveying means and to improve the stiffness-to-weight ratio of the assembly, thus saving material costs.

The invention can provide an improved conveyor chain guide rail assembly particularly for food product packaging machinery.

The invention can also provide a conveyor chain guide rail assembly, including a polymer segment and a pair of stainless steel strips having provisions for preventing deformation throughout the length thereof, while accommodating thermal linear expansion of the polymer segment.

The invention can further provide a conveyor chain guide rail assembly, including a polymer segment and a pair of stainless steel strips, wherein the polymer segment is substantially "Z" shaped in cross-section, with one flange of the segment having a wear surface formed on the distal end thereof to support a conveyor chain and lug system, and the second flange of the segment being supported on and confined between the pair of stainless steel strips.

In order that the invention may be clearly understood and readily carried into effect, reference will now be made, by way of example, to the accompanying drawings, in which:-
Figures 1A and 1B are plan views of respective end zones of a conveyor system of a food product packaging machine,
Figure 2A is a fragmentary side elevation taken from the plane of the line 2A-2A of Figure 1A, and looking in the direction of the arrows;
Figure 2B is a fragmentary side elevation taken from the plane of the line 2B-2B of Figure 1B, and looking in the direction of the arrows;
Figure 3 is a cross-sectional view taken on the line 3-3 of Figure 2A, and looking in the direction of the arrows;
Figure 4 is a cross-sectional view taken on the line 4-4 of Figure 1A, and looking in the direction of the arrows; and
Figure 5 is an enlarged view of a portion of Figure 4.

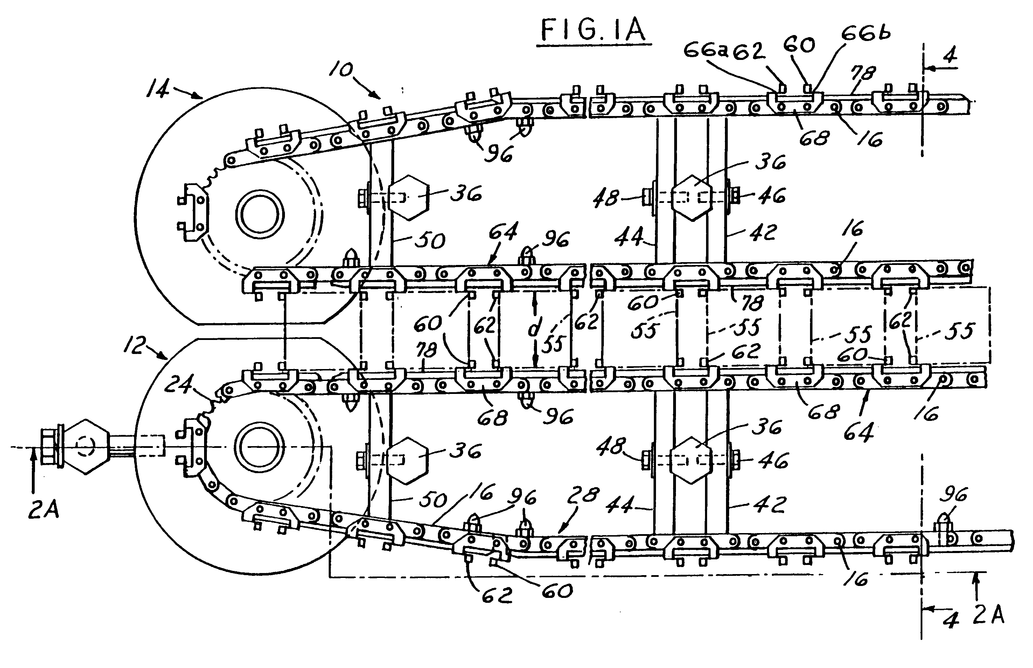

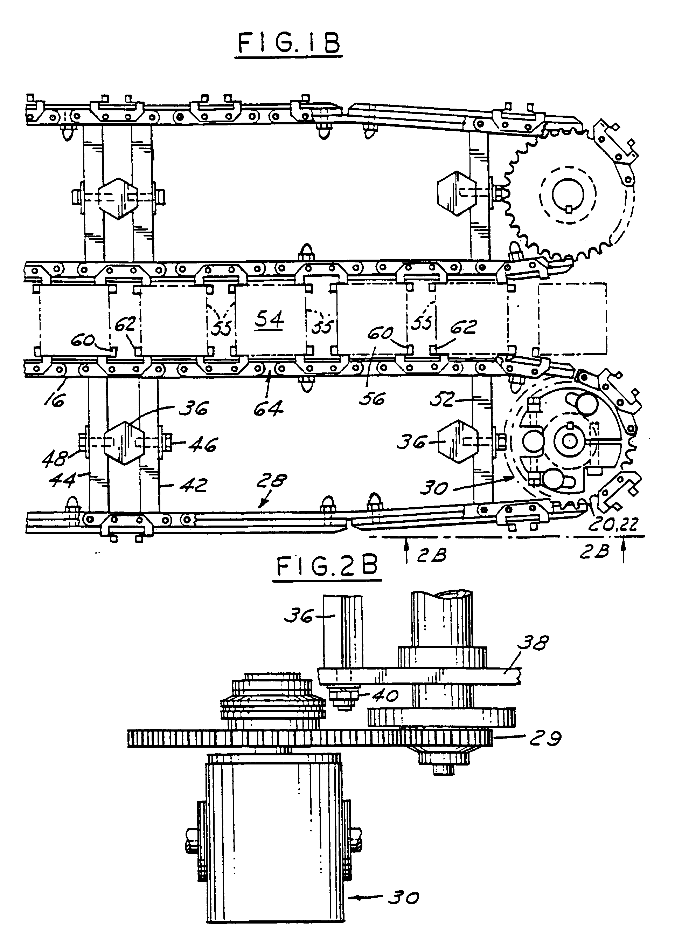

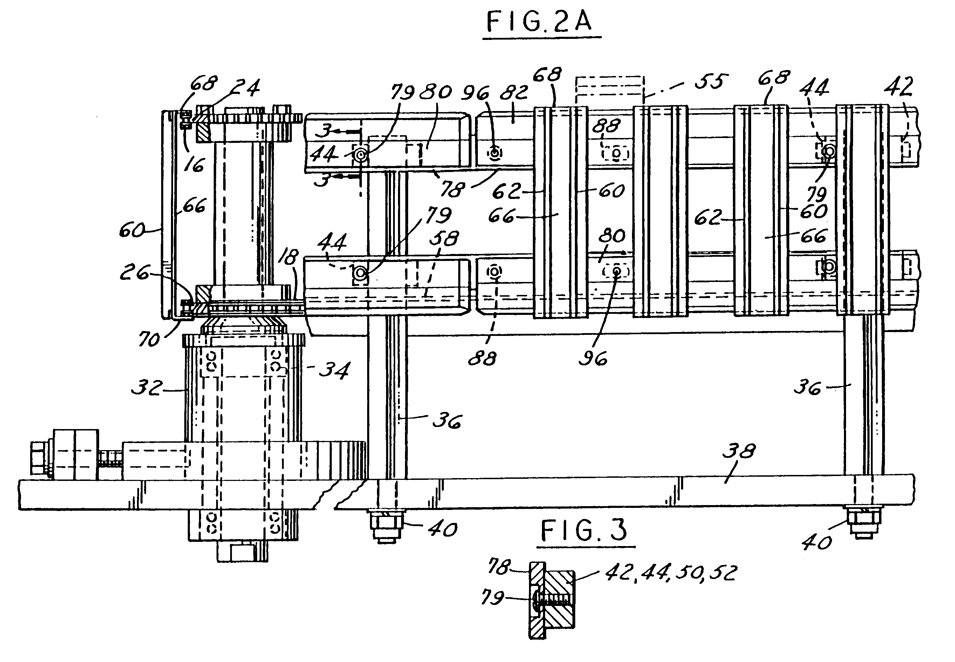

Referring now to the drawings in greater detail, they illustrate a conveyor system 10. The system 10 includes two identical, but opposite hand, chain assemblies 12 and 14 (Figures 1 and 2). For the sake of clarity, the assembly 12 on one side of the system 10 will be explained, the assembly 14 having comparable components.

The assembly 12 includes upper and lower endless chains 16 and 18 (Figure 2A), mounted around an upper and lower driven pair of sprockets 20 and 22 at one location (Figure 1B), and an upper and lower idler pair of sprockets 24 and 26 at the second location (Figures 1A and 2A), causing the chains 16 and 18 to form two tiers of closed loops 28.

The pair of upper and lower sprockets 20 and 22 are driven by a gear set 29 operatively connected to an indexer mechanism, represented as 30 (Figure 2B), while the pair of sprockets 24 and 26 are mounted on idler support structures 32 having suitable bearings 34.

A plurality of horizontally spaced support columns 36 secured to the machine base 38 by suitable fasteners 40 serve to support the chain assembly 12 in a manner to be described. A pair of vertically spaced equal length cross bars 42 and 44 are secured by suitable fasteners 46 and 48, respectively, to each of the fore and aft sides (Figures 1A and 1B) of each support column 36, except for the support columns immediately adjacent the oppositely disposed indexer mechanism 30 and the support structure 32.

In the latter case, vertically spaced cross bars 50 (Figure 1A) and 52 (Figure 1B) are secured to only one side of the support column 36, and extend a shorter distance to the outboard side thereof. The length to the inboard side thereof is the same as for the cross bars 42 and 44. This arrangement provides a straight line for the upper and lower chains 16 and 18 on the inboard side, and angled lines therefor on the outboard side as the chains leave the indexer mechanism 30 and as they approach the support structure 32. If desired, the outboard side may be straight from the indexer mechanism 30 to the support structure 32.

As may be noted on Figures 1A and 1B, each of the above described elements is duplicated at a predetermined distance "d" from the inboard side in an opposite hand configuration. The distance "d" is such that it defines a space 54 that accommodates the width of a selected size of either square or oblong rectangular cross-section cartons 55 adapted to being filled with a still liquid product prior to sealing the top closure thereof.

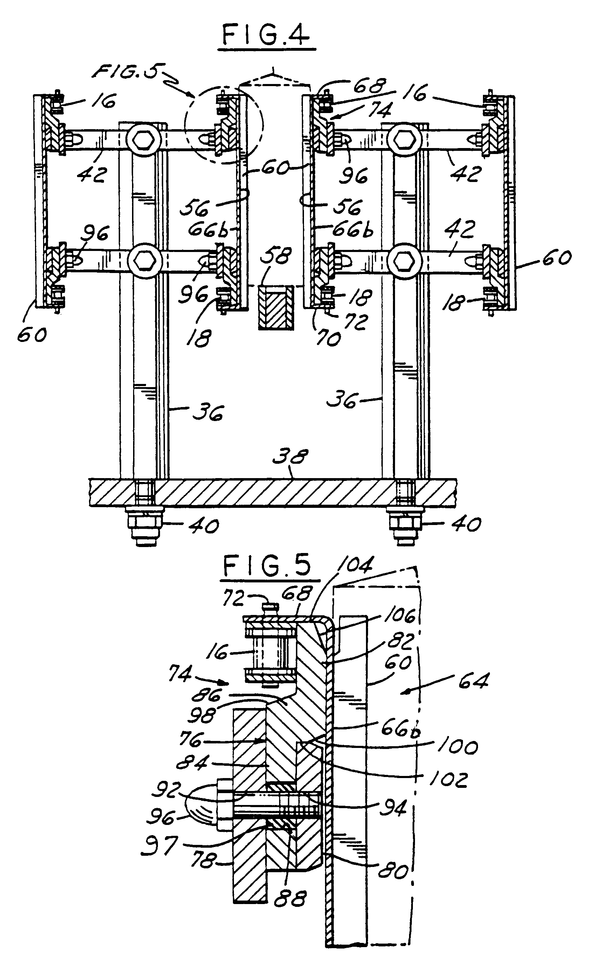

As shown in Figures 1 and 2, the cartons 55 are carried in individual compartments 56 (Figure 1) operatively connected to the upper and lower chains 16 and 18, and supported therein on a single longitudinal support member 58 (Figure 4). More specifically, each compartment 56 is formed by front and rear, square or oblong rectangular cross-section, vertical bars 60 and 62, respectively, located on each side of the space provided by the distance d. It may be noted in Figures 1A and 1B that, on each side of the space 54, a rear bar 62 and a front bar 60 are part of a lug assembly 64 operatively connected to the upper and lower chains 16 and 18.

The lug assembly 64 further includes either a vertical plate 66 (Figure 2A) carrying the pair of rear and front bars 62 and 60, or two vertical strips 66a and 66b carrying the respective bars 62 and 60 (Figures 1, 4 and 5). A bent extension 68 is formed at the upper end of the plate 66 or strips 66a and 66b, and a like bent extension 70 (Figure 4) is formed at the lower end of the plate 66 or strips 66a and 66b, extending respectively across the top surface of the upper chain 16 and across the bottom surface of the lower chain 18. The bent extensions 68 and 70 are secured to the respective chains 16 and 18 by suitable fasteners 72.

Conveyor chain guide rail assemblies 74, each including a segment 76 formed of a suitable polymer, preferably an ultra high molecular weight type polymer, commonly known as UHMW polymer, and a pair of stainless steel strips 78 and 80, carry the vertical plates 66 or strips 66a and 66b and each chain 16 and 18 in a manner and for a purpose which will now be described. The segments 76 and the strips 78 and 80 are formed in predetermined lengths, supported at spaced intervals by the cross bars 42, 44, 50 and 52. Each strip 78 is common to a plurality of assemblies 74.

The segment 76 is moulded or machined to form substantially a "Z" shaped cross-section (Figures 4 and 5). A first vertical leg 82 extends so as to be confined between the plate 66 or strips 66a and 66b and the adjacent chain 16 or 18, and abutted against the bent extension 68 for the upper chain 16, and against the bent extension 70 for the lower chain 18. The outer or second vertical leg 84 is connected to the first leg 82 by a short centre section 86, and extends intermediate the two steel strips 78 and 80. Openings 88 are formed through the second leg 84. One opening (not shown) in the length of the second leg 84 may be sized to serve as a locator, while the remaining openings 88 are elongated longitudinally of the segment 76 for a purpose to be described.

Each steel strip 78 is secured to the ends of the various cross bars 42, 44, 50 and 52 by suitable fasteners 79, as shown in Figure 3. As shown in Figure 5, an opening 92 is formed through the strip 78. The strip 80 is located between the vertical plate 66 or the vertical strips 66a and 66b and the second leg 84 of the segment 76, and abutted against the centre section 86, which extends at an obtuse angle to the legs 82 and 84. A threaded opening 94 is formed in the strip 80.

A threaded fastener 96 is extended through the openings 92 and 88, and threadedly connected in the threaded opening 94 to secure the strips 78 and 80 and the segment 76 together, with the interposition of a spacer 97 in the opening 88 and encircling the fastener 96, the length of the spacer 97 being slightly greater than the thickness of the leg 84 to prevent the leg from being forcefully clamped between the strips 78 and 80. The elongated opening 88 through the leg 84 is formed to be longer than the external diameter of the spacer 97. Thus, the segment 76 is slidably confined between the strips 78 and 80, thermal expansion thereof being possible by virtue of the elongated openings 88.

A first surface 98 forms one side of the centre section 86 of the segment 76 and is inclined obliquely downwardly (Figure 5) from the first leg 82 to the second leg 84. A second surface 100, substantially parallel to the surface 98, forms an outer portion of the other side of the centre section 86, and a horizontal surface 102 completes such other side. A horizontal surface 104 forms the distal end of the first leg 82, and a chamfer 106 may be formed on the edge adjacent the surface 104 to clear the radius corner between the plate 66 and the bent extension 68 or 70.

The horizontal surface 104 serves as a wear surface for supporting the upper chain 16, the bent extension 68, the vertical plate 66 or strips 66a and 66b, and the front and rear vertical bars 60 and 62. The horizontal surface 102 serves as a shoulder to support the segment 76 on the plate 80.

Referring once again to Figures 4 and 5, the following features may be noted:-
1. The shape of the segment 76 provides relatively high rigidity for its weight;
2. The horizontal surface 102 provides vertical support for the segment 76 on the strip 80 which, in turn, is supported via the fasteners 96 on the strip 78;
3. The tapered surfaces 98 and 100 facilitate flushing of any contaminants from the segment 76;
4. The horizontal surface 104 is a wear surface against the bent extension 68 or 70 for supporting and guiding the indexing chains 16 and 18, the vertical plate 66 or strips 66a and 66b, and the rear and front bars 62 and 60 forming the lug system;
5. The elongated opening 88 serves to accommodate thermal linear relative expansion between the polymer segment 76 and the stainless steel strips 78 and 80;
6. Together, the assembly of the Z-shaped segment 76 slidably mounted intermediate the strips 78 and 80 precludes deformation or buckling of the segment 76; and
7. The assembly of the segment 76 and the strips 78 and 80 provides an efficient mounting via the strip 78 to the cross bars 42, 44, 50 and 52 and, thence, through the support columns 36 to the machine base 38.

In operation, the chains 16 and 18, the bent extensions 68 and 70 and their associated vertical plate 66 or strips 66a and 66b, and the front and rear corner bars 60 and 62 are indexed as a unit by the indexing mechanism 30, around the various driven sprockets 20 and 22 and idler sprockets 24 and 26, supported and guided by the assemblies consisting of the polymer segments 76 intermediate the stainless steel strips 78 and 80.

It should be apparent that the system described with reference to the drawings provides an improved, efficient, rigid, easily cleanable, and non-deformable conveyor chain guide rail system, with provisions for accommodating thermal expansion of a key component thereof.

It should be further apparent that the system can be used on conveyor systems adapted for carrying various sizes of containers or cartons.

## Claims

1. A guide rail assembly for an endless conveying means (16,18,66), comprising a polymer segment (76) and first and second metal supporting strips (78,80) extending along respective opposite sides of said segment (76) and receiving and supporting said segment (76) therebetween, said segment (76) comprising first and second longitudinal edge portions (82, 84) and a longitudinal intermediate portion (86) between the first and second edge portions (82,84), the first edge portion (82) providing a longitudinal guide surface (104) for said endless conveying means (16,18,66), and the second longitudinal edge portion (84) being received between said strips (78,80).

2. An assembly according to claim 1, wherein said polymer segment (76) is of substantially Z-shaped cross-section with said intermediate portion (86) inclined to said edge portions (82,84) in cross-section.

3. An assembly according to claim 2, wherein, in cross-section, said intermediate portion (86) is inclined obtusely to said edge portions (82,84).

4. An assembly according to claim 2 or 3, wherein said strips (78,80) have respective major faces substantially co-planar with each other.

5. An assembly according to any preceding claim, wherein said intermediate portion (86) has a surface (102) which bears directly upon an inner edge surface of the second strip (80).

6. An assembly according to any preceding claim, wherein said second longitudinal edge portion (84) is slidably received between said strips (78,80).

7. An assembly according to claim 6, wherein said second longitudinal edge portion (84) is longitudinally slidably received between said strips (78,80) to permit relative thermal linear expansion therebetween.

8. An assembly according to any preceding claim, wherein said strips (78,80) are interconnected by means of clamping fasteners (96) which extend in respective holes (92) in the first strip (78), respective holes (88) in said second edge portion (84), and respective holes (94) in the second strip (80), and wherein spacers (97) are located in said holes (88) in said second edge portion (84) to prevent said strips (78,80) from bearing clampingly upon said second edge portion (84).

9. An assembly according to claim 8 as appended to claim 7, wherein the dimension of each hole (88) in said second edge portion (84) longitudinally of said segment (76) is significantly greater than the overall dimension longitudinally of said segment (76) of the fastener (96) and the spacer (97) at that hole (88).

10. A packaging machine including first and second endless conveying means (16,18,66) spaced apart from each other horizontally and extending substantially horizontally, respective inner runs of said conveying means (16,18,66) defining therebetween compartments (56) for receiving packaging containers (55), and a plurality of guide rail assemblies (76,78,80) each according to any preceding claim and supporting and guiding said conveying means (16,18,66).

11. A packaging machine according to claim 10, wherein each guide roll assembly (76,78,80) is according to claim 7 or 8, each endless conveying means (16,18,66) includes substantially vertical compartment - bounding elements (66), each guide rail assembly (76,78,80) is disposed inwards from said elements (66) of its associated conveying means (16,18,66), and said fasteners (96) are operably accessible from inwards of their associated guide rail assembly (76,78,80).

## Patentansprüche

1. Führungsschienen-Vorrichtung für ein Mittel zum Endlosfördern (16, 18, 66), umfassend ein Polymer-Segment (76) und erste und zweite Metall-Abstützstreifen (78, 80), die sich entlang der betreffenden gegenüberliegenden Seiten des Segmentes (76) erstrecken und dazwischen das Segment (76) aufnehmen und abstützen, wobei das Segment (76) einen ersten und zweiten längs verlaufenden Kantenteil (82, 84) und einen längs verlaufenden Zwischenteil (86) zwischen dem ersten und dem zweiten Kantenteil (82, 84) umfaßt, wobei der erste Kantenteil (82) eine längs verlaufende Führungsoberfläche (104) für das Endlos-Fördermittel (16, 18, 66) aufweist, und wobei der zweite längs verlaufende Kantenteil (84) zwischen den Streifen (78, 80) aufgenommen wird.

2. Baugruppe nach Anspruch 1, wobei das Polymersegment (76) einen im wesentlichen Z-förmigen Querschnitt aufweist, wobei der Zwischenteil (86) im Querschnitt zu den Endteilen (82, 84) geneigt ist.

3. Baugruppe nach Anspruch 2, wobei, im Querschnitt, der Zwischenteil (86) stumpf zu den Endteilen (82, 84) geneigt ist.

4. Baugruppe nach Anspruch 2 oder 3, wobei die Streifen (78, 80) jeweilige Hauptflächen aufweisen, die zueinander im wesentlichen koplanar sind.

5. Baugruppe nach einem beliebigen der vorhergehenden Ansprüche, wobei der Zwischenteil (86) eine Oberfläche (102) aufweist, die direkt von einer inneren Kantenoberfläche des zweiten Streifens (80) abgestützt wird.

6. Baugruppe nach einem beliebigen der vorhergehenden Ansprüche, wobei der zweite längs verlaufende Kantenteil (84) gleitfähig zwischen den Streifen (78, 80) aufgenommen wird.

7. Baugruppe nach Anspruch 6, wobei der zweite längs verlaufende Kantenteil (84) in Längsrichtung gleitfähig zwischen den Streifen (78, 80) aufgenommen wird, so daß eine relative lineare Wärmeausdehnung dazwischen ermöglicht wird.

8. Baugruppe nach einem beliebigen der vorhergehenden Ansprüche, wobei die Streifen (78, 80) durch Klemm-Befestigungsvorrichtungen (96) miteinander verbunden sind, die sich in betreffenden Löchern (92) im ersten Streifen (78), betreffenden Löchern (88) im zweiten Kantenteil (84) und betreffenden Löchern (94) im zweiten Streifen (80) erstrecken, und wobei sich Distanzstücke (97) in den Löchern (88) des zweiten Kantenteils (84) befinden, um das klammernde Abstützen der Streifen (78, 80) auf dem zweiten Kantenteil (84) zu verhindern.

9. Baugruppe nach Anspruch 8, wie er an Anspruch 7 angefügt ist, wobei die Abmessungen jedes Lochs (88) im zweiten Kantenteil (84), das in Längsrichtung des zweiten Segmentes (76) verläuft, wesentlich größer als die Gesamtabmessungen des in Längsrichtung verlaufenden Segmentes (76) der Befestigungsvorrichtung (96) und des Distanzstückes (97) an diesem Loch (88) sind.

10. Verpackungsmaschine, die das erste und das zweite Mittel zum Endlosfördern (16, 18, 66) umfaßt, die horizontal voneinander getrennt sind und sich im wesentlichen horizontal erstrecken, wobei jeweilige innere Durchläufe des Fördermittels (16, 18, 66) Kammern (56) zum Aufnehmen von Verpackungsbehältern (55) dazwischen definieren, und wobei eine Mehrzahl von Führungsschienen-Baugruppen (76, 78, 80), jede nach einem beliebigen der vorhergehenden Ansprüche, das Fördermittel (16, 18, 66) abstützen und führen.

11. Verpackungsmaschine nach Anspruch 10, wobei jede Führungswalzen-Baugruppe (76, 78, 80) Anspruch 7 oder 8 entspricht, wobei jedes Mittel zum Endlosfördern (16, 18, 66) im wesentlichen vertikale kammerbegrenzende Elemente (66) umfaßt, wobei jede Führungsschienen-Baugruppe (76, 78, 80) innerhalb der Elemente (66) des damit zusammenhängenden Fördermittels (16, 18, 66) angeordnet ist, und wobei die Befestigungsvorrichtungen (96) operativ vom Inneren der mit ihnen zusammenhängenden Führungsschienen-Baugruppe (76, 78, 80) aus zugänglich sind.

## Revendications

1. Un montage de rail de guidage pour un convoyeur sans fin (16, 18, 66), comprenant un segment polymère (76) et de première et seconde bandes de support métalliques (78, 80) s'étendant le long des côtés opposés respectifs dudit segment (76) et recevant et supportant ledit segment (76) entre eux, ledit segment (76) comportant de première et seconde parties de bord longitudinales (82, 84) et une partie intermédiaire longitudinale (86) entre les première et seconde parties de bord (82, 84), la première partie de bord (82) fournissant une surface de guidage longitudinale (104) pour ledit convoyeur sans fin (16, 18, 66), et la seconde partie de bord longitudinale (84) étant reçue entre lesdites bandes (78, 80).

2. Un montage selon la revendication 1, dans lequel ledit segment polymère (76) présente une section transversale sensiblement en forme de Z, ladite partie intermédiaire (86) étant, en coupe transversale, inclinée par rapport à ladite partie de bord (82, 84).

3. Un montage selon la revendication 2, dans lequel, en coupe transversale, ladite partie intermédiaire (86) est inclinée d'un angle obtus par rapport à ladite partie de bord (82, 84).

4. Un montage selon la revendication 2 ou 3, dans lequel lesdites bandes (78, 80) présentent des faces principales respectives sensiblement co-planaires entre elles.

5. Un montage selon une revendication précédente quelconque, dans lequel ladite partie intermédiaire (86) présente une surface (102) qui porte directement sur une surface de bord interne de la seconde bande (80).

6. Un montage selon une revendication précédente quelconque, dans lequel ladite seconde partie de bord longitudinale (84) est reçue de manière coulissante entre lesdites bandes (78, 80).

7. Un montage selon la revendication 6, dans lequel ladite seconde partie de bord longitudinale (84) est reçue à coulissement longitudinal entre lesdites bandes (78, 80) afin de permettre une dilatation thermique linéaire relative entre elles.

8. Un montage selon une revendication précédente quelconque, dans lequel lesdites bandes (78, 80) sont reliées entre elles au moyen d'organes de fixation par serrage (96) qui s'étendent dans des trous correspondants (92) de la première bande (78), des trous correspondants (88) de la seconde partie de bord (84) et des trous correspondants (94) de la seconde bande (80), et dans lequel des organes d'espacement (97) sont placés dans lesdits trous (88) de ladite seconde partie de bord (84) pour empêcher auxdites bandes (78, 80) de porter de manière serrée sur ladite partie de bord (84).

9. Un montage selon la revendication 8 dans sa dépendance de la revendication 7, dans lequel la dimension de chaque trou (88) de ladite seconde partie de bord (84) dans le sens longitudinal audit segment (76) est, de manière significative, plus grande que la dimension longitudinale d'ensemble dudit segment (76) de l'organe de fixation (96) et de l'organe d'espacement (97) au niveau de ce trou (88).

10. Une machine d'emballage comprenant un premier et un second convoyeurs sans fin (16, 18, 66) écartés longitudinalement l'un de l'autre et s'étendant de manière sensiblement horizontale, les brins internes respectifs desdits convoyeurs (16, 18, 66) définissant entre eux des compartiments (56) pour recevoir des récipients d'emballage (55), et plusieurs montages de rails de guidage (76, 78, 80), chacun selon une quelconque revendication précédente et supportant et guidant lesdits convoyeurs (16, 18, 66).

11. Une machine d'emballage selon la revendication 10, dans laquelle chaque montage de rails de guidage (76, 78, 80) est conforme à la revendication 7 ou 8, chaque convoyeur sans fin (16, 18, 66) comprend des éléments à compartiments de liaison sensiblement verticaux (66), chaque montage de rails de guidage (76, 78, 80) est disposé vers l'intérieur desdits éléments (66) de son convoyeur associé (16, 18, 66), et lesdits organes de fixation (96) sont fonctionnellement accessibles de l'intérieur de leur montage de rail de guidage associé (76, 78, 80).
